# EUROPEAN PATENT SPECIFICATION

(11) **EP 3 288 792 B1**
(45) Date of publication and mention of the grant of the patent: **15.04.2020**
(21) Application number: 16720760.4
(22) Date of filing: 22.04.2016
(51) Int. Cl.: B60K 37/06, B60K 35/00, G06F 3/0481, G06F 3/0484, G06F 3/0488, G06F 3/01

(54) **OPERATING ASSEMBLY FOR A MOTOR VEHICLE WITH OPERATING DEVICE IN AND/OR ON A STEERING WHEEL RIM, MOTOR VEHICLE AS WELL AS METHOD**
BEDIENANORDNUNG FÜR EIN KRAFTFAHRZEUG MIT BEDIENVORRICHTUNG IN UND/ODER AN EINER LENKRADFELGE, KRAFTFAHRZEUG SOWIE VERFAHREN
ENSEMBLE DE COMMANDE POUR UN VÉHICULE AUTOMOBILE AVEC DISPOSITIF DE COMMANDE DANS ET/OU SUR UNE COURONNE DE VOLANT DE DIRECTION, VÉHICULE AUTOMOBILE AINSI QUE PROCÉDÉ

(30) Priority: 28.04.2015 DE 102015106487
(43) Date of publication of application: 07.03.2018
(73) Proprietor: Valeo Schalter und Sensoren GmbH, 74321 Bietigheim-Bissingen (DE)
(72) Inventor: BONHOURE, Patrick, 74100 Annemasse (FR); KUOCH, Siav Kuong, 94100 Saint Maur des Fosses (FR)
(74) Representative: Claassen, Maarten Pieter
(86) International application number: PCT/EP2016/058957
(87) International publication number: WO 2016/173932

(56) References cited:
- EP-A1- 1 564 107
- WO-A1-2014/002113
- WO-A2-2007/076830
- DE-A1-102014 118 957
- DE-T5-112015 006 119
- US-A1- 2012 179 328

## Description

The present invention relates to an operating assembly for a motor vehicle with at least one first operating device disposed on and/or in a steering wheel of the motor vehicle and adapted to acquire an operating input of an occupant of the motor vehicle, and with a control device adapted to control a functional device of the motor vehicle depending on the operating input acquired by the operating device. In addition, the invention relates to a motor vehicle with such an operating assembly. Finally, the present invention relates to a method for operating an operating assembly for a motor vehicle.

Presently, the interest is directed to operating assemblies for motor vehicles. Such operating assemblies can include an operating device, by means of which an occupant of the motor vehicle is able to perform an operating input. Such an operating device can for example have an operating button or a touch-sensitive surface. Such an operating device can for example be disposed in a dashboard of the motor vehicle. Furthermore, operating devices are known, which are disposed in and/or on a steering wheel of the motor vehicle. Such operating devices are connected to a control device for data transmission. If an operating input is recognized by means of the operating device, a corresponding signal can be transmitted to the control device. The control device can then control a functional device of the motor vehicle depending on the acquired operating input. Such a functional device can for example be a navigation system, an information and entertainment system, a driver assistance system or the like.

In this context, EP 2 018 992 A1 describes a motor vehicle cockpit with a plurality of display units for presenting information, wherein the display units are disposed in different positions in the interior of the motor vehicle. By a control assembly, the number and the content of the information each presented on the display unit are controllable. An association of a limb of a user and/or an object disposed on the limb with a first display unit as well as a gesture-dependent variation of the association with a further display unit can be contactless acquired by a capturing means. The information can be supplied to the control assembly and the further display unit can be controlled by the control assembly for presenting the information of the first display unit corresponding to the variation of the association.

Further, DE 10 2012 020 320 A1 describes a method for controlling a freely programmable instrument cluster of a motor vehicle. Therein, the instrument cluster is controllable such that it can be operated in different operating modes. Further, it is provided that the instrument cluster is operated or operable in at least two operating modes, of which the one operating mode serves for exclusive or at least predominant presentation of non-selectable and/or non-activatable information and the at least one other operating mode serves for exclusive or at least predominant presentation of selectable and/or activatable information.

Moreover, DE 10 2009 033 383 A1 describes a motor vehicle with a head-up display for graphically presenting information on a windscreen of the motor vehicle as well as with a further display for graphically presenting information. Further, the motor vehicle has a touch pad with a first operating area and a second operating area, wherein the presentation of information on the head-up display is alterable by means of the touch pad in the first operating area and the presentation of information on the further display is alterable by means of the touch pad in the second operating area.

US2012179328A1 discloses an operating device disposed on a steering wheel rim and adapted to acquire a wiping movement.

It is the object of the present invention to demonstrate a solution, according to claims 1 and 13, how an operating assembly of the initially mentioned kind can be more simply and reliably operated. According to the invention, this object is solved by an operating assembly, by a motor vehicle as well as by a method having the features according to the respective independent claims. Advantageous implementations of the invention are the subject matter of the dependent claims, of the description and of the figures.

An operating assembly according to the invention for a motor vehicle includes at least one first operating device disposed on and/or in a steering wheel of the motor vehicle. The at least one first operating device is adapted to acquire an operating input of an occupant of the motor vehicle. Moreover, the operating assembly includes a control device adapted to control a functional device of the motor vehicle depending on the operating input acquired by the at least one first operating device. Therein, the at least one first operating device is disposed in and/or on a steering wheel rim of the steering wheel and is adapted to acquire a wiping movement, which the occupant performs with at least one finger, as the operating input, wherein the at least one first operating device has a touch-sensitive screen and is adapted to provide a display for the occupant.

The operating assembly is adapted for the use in a motor vehicle. The operating assembly includes at least one first operating device. This first operating device is disposed in and/or on the steering wheel rim of the steering wheel. The steering wheel of the motor vehicle serves for steering the steerable wheels of the motor vehicle. The steering wheel includes the steering wheel rim, which is substantially annularly formed. Moreover, the steering wheel can include a plurality of spokes mechanically connecting the steering wheel rim to a center part of the steering wheel. The at least one first operating device is now adapted to acquire an operating input performed on the steering wheel rim. The first operating device can include a capacitive sensor. The at least one first operating device can acquire a wiping movement performed by an occupant of the motor vehicle, in particular the driver, as the operating input. In particular, a wiping movement or a wiping gesture can be acquired, which is performed with at least one finger. The first operating device can be disposed in the upper area of the steering wheel rim in the non-deflected state of the steering wheel. With a first operating device configured as such, a false operation in turning the steering wheel can be prevented.

In addition, the operating assembly has the control device, which can for example be formed by an electronic controller of the motor vehicle. The control device is connected to the first operating device for data transmission. If the operating input or a predetermined wiping gesture is acquired by the operating device, a corresponding signal can be transmitted from the operating device to the control device. As a result, a corresponding control signal for a functional device of the motor vehicle can be provided by the control device. Such a functional device of the motor vehicle can for example be a drive engine, a navigation system, an information and entertainment system or the like. Thus, a functional device can be reliably operated by means of a first operating device disposed on the steering wheel of the motor vehicle.

Preferably, the control device is adapted to start a drive engine of the motor vehicle as the functional device depending on the operating input. In order to start the drive engine of the motor vehicle, for example, a predetermined wiping gesture can be performed on the first operating device as the operating input. For example, a wiping movement from a first edge of the first operating device to a second edge of the first operating device can be preset as the operating input. In particular, a wiping movement from the left edge of the first operating device to the right edge of the first operating device can be preset. In this manner, the motor vehicle can be simply and intuitively started by means of the first operating device.

In a further embodiment, the control device is adapted to control a driver assistance system of the motor vehicle as the functional device depending on the operating input. Such a driver assistance system can for example serve for maneuvering the motor vehicle in autonomous or automated manner. The driver assistance system can for example perform an intervention in the steering of the motor vehicle. Alternatively or additionally, the driver assistance system can perform an intervention in the brake system and/or the drive engine of the motor vehicle. Thus, by means of the operating input or the wiping movement, it can for example be controlled whether or not the driver assistance system is to be activated. For activating and for deactivating the driver assistance system, respectively, corresponding wiping gestures can be predefined. Thus, the driver assistance system can be controlled in simple manner.

Furthermore, according to the invention the at least one first operating device has a touch-sensitive screen and is adapted to provide a display for the occupant. In other words, the at least one first operating device is formed as a touch-sensitive screen or as a touch screen. Thus, by the first operating device, both operating inputs and wiping gestures can be acquired, respectively, and a display for the occupant, in particular the driver, of the motor vehicle can additionally be provided. In that the first operating device is disposed on the steering wheel rim, the display can be well recognized by the driver of the motor vehicle. Further, false operation of the first operating device can be avoided.

In a further embodiment, the display describes a starting point and/or a destination point of a route and/or a current position of the motor vehicle. With the aid of the first operating device, navigation data, in particular secondary information with respect to the navigation, can be provided to the driver. Thus, graphics can for example be presented on the first operating device, which describes the starting point and/or the destination point of a route. In addition, the current position of the motor vehicle can be presented with respect to the starting point and/or the destination point. In particular, the current position of the motor vehicle with respect to the starting point and/or the destination point can be presented substantially to scale. Further information relating to the navigation can be presented on a display device or a screen of the operating assembly.

In a further embodiment, the display includes information to an autonomous and/or a manual driving state of the motor vehicle. With the aid of the first operating device, for example, it can be presented if the motor vehicle is currently operated in an autonomous or a manual operating mode. Furthermore, it can for example be displayed when the motor vehicle is transferred from a manual driving state into an autonomous driving state and vice versa. Thus, the first operating device can be used both in the manual and in the autonomous driving state to acquire operating inputs as well as to provide a display.

In a further embodiment, the display includes a plurality of operating elements and the control device is adapted to alter a presentation and/or an arrangement of the operating elements depending on the operating input. Various operating elements can be presented on the first operating device, which are associated with corresponding functions or the functional devices of the motor vehicle. Such an operating element can for example be associated with an Internet browser, an email program or another communication service. As a result of the operating input or the wiping movement, the presentation of the operating elements can be altered and in particular displaced. It can also be provided that the arrangement of the operating elements on the display of the first operating device is varied as a result of the acquired wiping gesture. Thus, the driver can correspondingly adapt the operating elements presented on the first operating device.

In a further embodiment, the operating assembly has at least one display device and the control device is adapted to display an application associated with the operating element on the at least one display device. The operating assembly further has at least one display device or a screen. In addition to the display provided by the first operating device, information can be provided for the driver on this display device. If one of the operating elements presented on the first operating device is selected by the driver, an application associated with the operating element can be presented on the at least one display device. For example, contents of an Internet browser or a communication service can be presented on the display device.

Preferably, the control device is adapted to display the application on the at least one display device if a wiping gesture is acquired starting from the operating element towards the at least one display device. If the operating element displayed on the first operating device is virtually shifted towards the at least one display device by the finger of the driver, this can be acquired by the first operating device as an operating input or as a wiping gesture. As a result of the acquired operating input, the application associated with the operating element can then be presented on the at least one display device. Therein, it can also be provided that the operating assembly has multiple display devices. Thus, in simple manner by means of a corresponding wiping gesture performed on the first operating device, it can be selected, on which of the display devices the application associated with the operating element is displayed. Thereby, a simple and intuitive operation is allowed.

Furthermore, it is advantageous if the operating assembly has a first display device associated with a head-up display, and a second display device associated with an instrument cluster. The first display device of the operating assembly can be associated with a head-up display. The second display device of the operating assembly can be associated with an instrument cluster of the motor vehicle. If a wiping movement downwards towards the instrument cluster is performed starting from the operating element displayed on the first operating device, the application associated with the operating element can be presented on the second display device of the instrument cluster. If a wiping movement upwards towards the head-up display is carried out starting from the operating element, the application associated with the operating element can be displayed on the first display device. This allows simple operation of the operating assembly fast to be learned.

In a further embodiment, the operating assembly includes at least one second operating device disposed on and/or in a spoke of the steering wheel. Therein, it can also be provided that the operating assembly includes two second operating devices disposed on one or different spokes of the steering wheel. Thus, a further operating device can be provided on the steering wheel in addition to the first operating device. The at least one second operating device can also have a touch-sensitive screen. Thus, corresponding operating inputs, which the occupant performs with at least one finger, can also be acquired by means of the at least one second operating device and a display can additionally be provided to the occupant.

Preferably, a keyboard can be provided by means of at least one second operating device. In particular, a typewriter keyboard can be provided by means of the at least one second operating device. In particular if the motor vehicle is operated in an autonomous operating mode, a keyboard can be provided by the at least one second operating device. Thus, the driver can for example conveniently prepare messages during the autonomous operation of the motor vehicle.

A motor vehicle according to the invention includes an operating assembly according to the invention. The motor vehicle is in particular formed as a passenger car.

A method according to the invention serves for operating an operating assembly for a motor vehicle. Herein, by means of at least one first operating device disposed on and/or in a steering wheel of the motor vehicle, an operating input of an occupant of the motor vehicle is acquired. In addition, by means of a control device, a functional device of the motor vehicle is controlled depending on the operating input acquired by the at least one first operating device. Further, the at least one first operating device is disposed in and/or on a steering wheel rim of the steering wheel. By the at least one first operating device, a wiping movement, which the occupant performs with at least one finger, is acquired as the operating input, wherein the at least one first operating device has a touch-sensitive screen and is adapted to provide a display for the occupant.

The preferred embodiments presented with respect to the operating assembly according to the invention and the advantages thereof correspondingly apply to the motor vehicle according to the invention as well as to the method according to the invention.

Now, the invention is explained in more detail based on preferred embodiments as well as with reference to the attached drawings.

There show:
- Fig. 1: in schematic illustration a motor vehicle according to an embodiment of the present invention, which includes an operating assembly;
- Fig. 2: the operating assembly in a first embodiment;
- Fig. 3: the operating assembly in a second embodiment;
- Fig. 4: the operating assembly, which includes two display devices, two operating devices disposed on the steering wheel;
- Fig. 5: a first operating input acquired by the first operating device;
- Fig. 6: a further operating input acquired by the first operating device;
- Fig. 7: possible displays presented by the first display device, the first operating device and the second operating device;
- Fig. 8: further displays presented by the first display device, the second display device, the first operating device and the second operating device;
- Fig. 9: operating elements, which are presented by means of the first operating device and the display of which is altered by the operating input;
- Fig. 10, 11: the operating elements, which are moved towards the respective display devices by means of a wiping movement, wherein the application associated with the operating element is presented on the respective display device.

In the figures, identical and functionally identical elements are provided with the same reference characters.

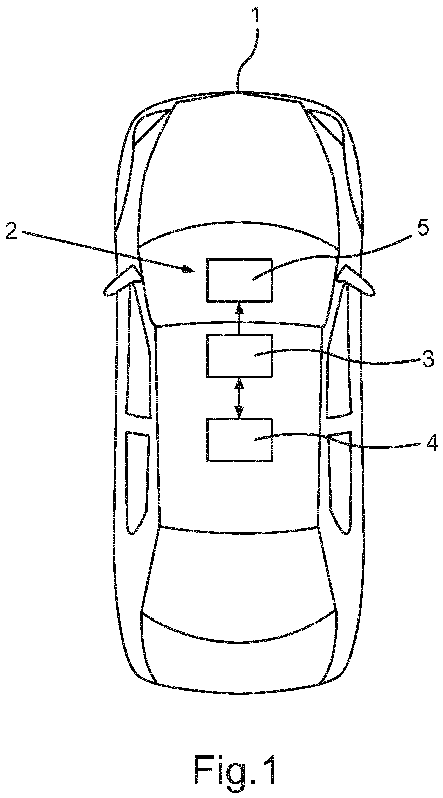

Fig. 1 shows a motor vehicle 1 according to an embodiment of the present invention. Presently, the motor vehicle 1 is formed as a passenger car. The motor vehicle 1 includes an operating assembly 2, which is presently only schematically illustrated. The operating assembly 2 in turn includes a control device 3, which can for example be formed by an electronic controller of the motor vehicle 1.

Further, the operating assembly 2 includes a first operating device 4. The first operating device 4 is connected to the control device 3 for data transmission. An operating input provided by a driver or an occupant of the motor vehicle 1 can be acquired by the first operating device 4. If the operating input is acquired by the first operating device 4, this can be transmitted to the control device 3. A corresponding control signal can be provided by the control device 3 to control a functional device of the motor vehicle 1. In the present embodiment, a first display device 5 of the motor vehicle 1 is controlled as the functional device by means of the control device 3. Thus, a display presented on the first display device 5 can for example be altered.

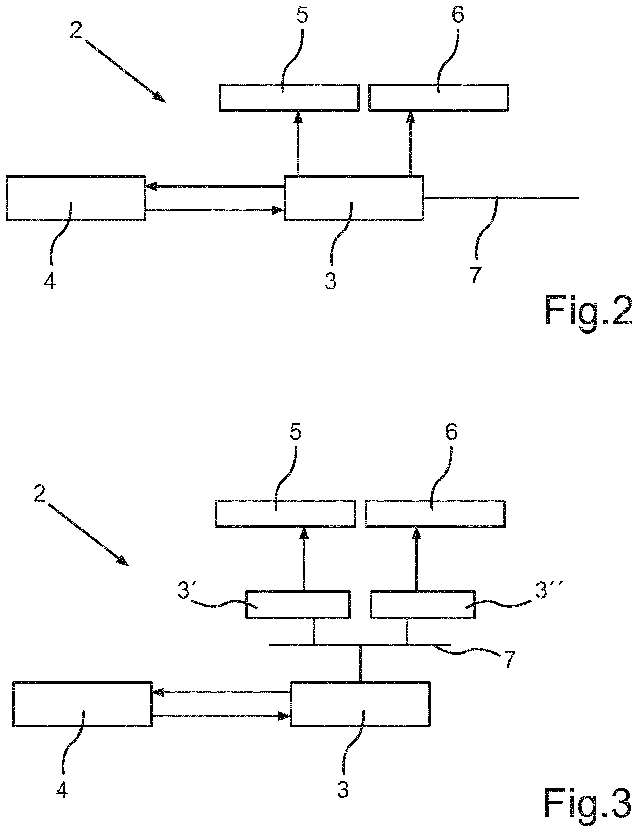

Fig. 2 shows a schematic illustration of the operating assembly 2. Here, the operating assembly additionally includes a second display device 6. The first display device 5 can for example be associated with a head-up display 8. The second display device 6 can for example be associated with an instrument cluster 9 of the motor vehicle 1. The first operating device 4 can for example include a touch screen or a touch-sensitive screen. Corresponding signals can be transmitted from the first operating device 4 to the control device 3, which describe, in which positions on the touch-sensitive screen gestures have been acquired. Furthermore, corresponding video signals can be transmitted from the control device 3 to the first display device 5, the second display device 6 and the first operating device 4. The operating assembly 2 is additionally coupled to a vehicle data bus 7.

Fig. 3 shows the operating assembly 2 in a further embodiment. Herein, the operating assembly 2 includes three control devices 3, 3' and 3". Therein, the control devices 3, 3' and 3" are connected to each other via the data bus 7. The functionality of the operating assembly is analogous to the operating assembly 2 according to Fig. 2.

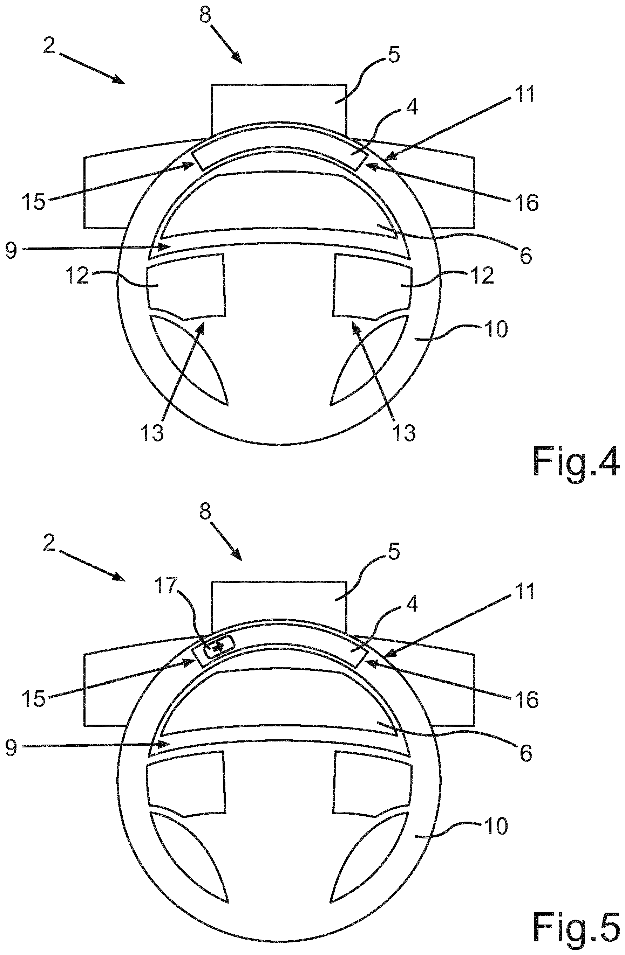

Fig. 4 shows the operating assembly 2 in a further embodiment. Herein, it can be recognized that the first display device 5 is associated with the head-up display 8. Further, it can be recognized that the second display device 6 is associated with the instrument cluster 9. Further, Fig. 4 shows the steering wheel 10 of the motor vehicle 1. Therein, it can be recognized that the first operating device 4 is associated with a steering wheel rim 11 of the steering wheel 10. Further, the operating assembly 2 includes two second operating devices 12, which are associated with the spokes 13 of the steering wheel 10. The second operating devices 12 are presently also formed as touch-sensitive screens or as touch screens.

Fig. 5 shows an operating assembly 2 in a further embodiment. This operating assembly 2 only has the first operating device 4. The first operating device 4 is adapted to acquire a wiping movement or a wiping gesture as the operating input, which is performed by a finger 14 of the vehicle occupant, in particular the driver. For example, a wiping gesture can be acquired, which is performed from the left edge 15 to the right edge 16 of the first operating device 4. Presently, this is schematically identified by the arrow 17. By such an operating gesture, a drive engine of the motor vehicle 1 can for example be started by means of the control device 3.

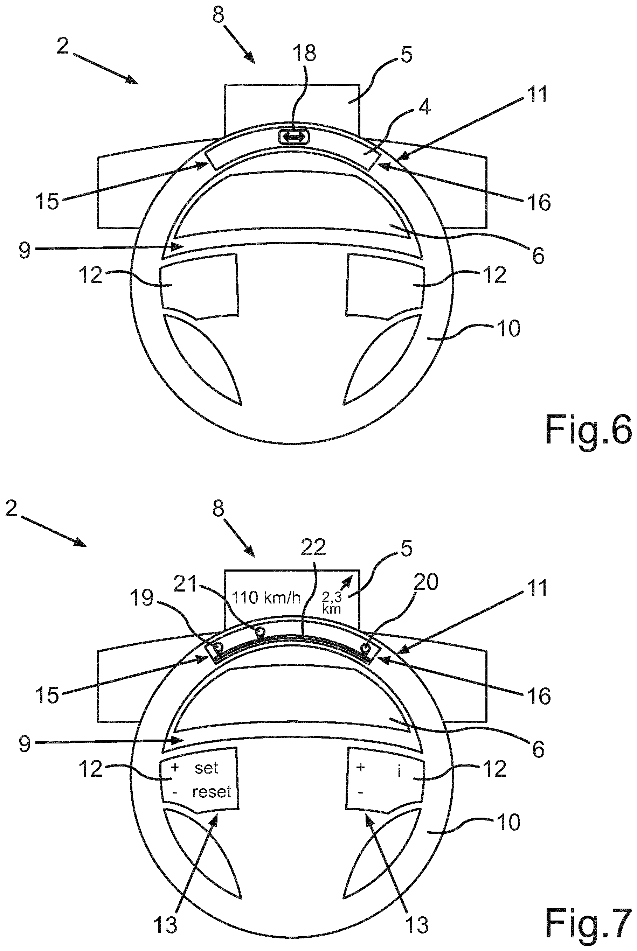

Fig. 6 shows an operating assembly 2 in a further embodiment. This operating assembly 2 too only has the first operating device 4. By means of the first operating device 4, an operating input or a wiping gesture can be acquired, which is performed starting from a center of the first operating device 4 either to the left edge 15 or to the right edge 16 of the operating device 4. Presently, this is illustrated by the arrow 18. Thus, a question if the motor vehicle 1 is to be operated in an autonomous drive operation can for example be presented on the first display device 5. If a wiping gesture to the left is effected, this cannot be effected. In case the wiping gesture is performed to the right, the autonomous drive mode can be activated. Therein, corresponding symbols or a corresponding text can also be presented on the first operating device 4, which explain to the driver, which wiping gesture is associated with which function.

Fig. 7 shows the operating assembly 2 in a further operating mode. Here, it is for example illustrated how the operating assembly 2 can be operated during navigation by a navigation system of the motor vehicle 1. Therein, a starting position 19, a destination position 20 and a current position 21 of the motor vehicle 1 on a route are presented to the driver of the motor vehicle 1 by means of the first operating device 4. Thus, the driver can assess in simple manner, which path distance he has already traveled or which path distance he still has to travel. Further, a traffic density or jam information can be presented to the driver on a corresponding strip 22 with the aid of a corresponding color identification. On the first display device 5, further information with respect to the navigation can be presented to the driver. Presently, corresponding direction indications as well as the current speed are presented to the driver. On the second display device 6, in addition, the current speed and/or the rotational speed can be presented to the driver by a tachometer and a rotational speed sensor. On the second operating device 12, corresponding symbols are presented to the driver, by which he can operate further functional devices of the motor vehicle 1. For example, he can correspondingly adjust the volume of an information and entertainment system. Further, he can access to telephone functions or the like.

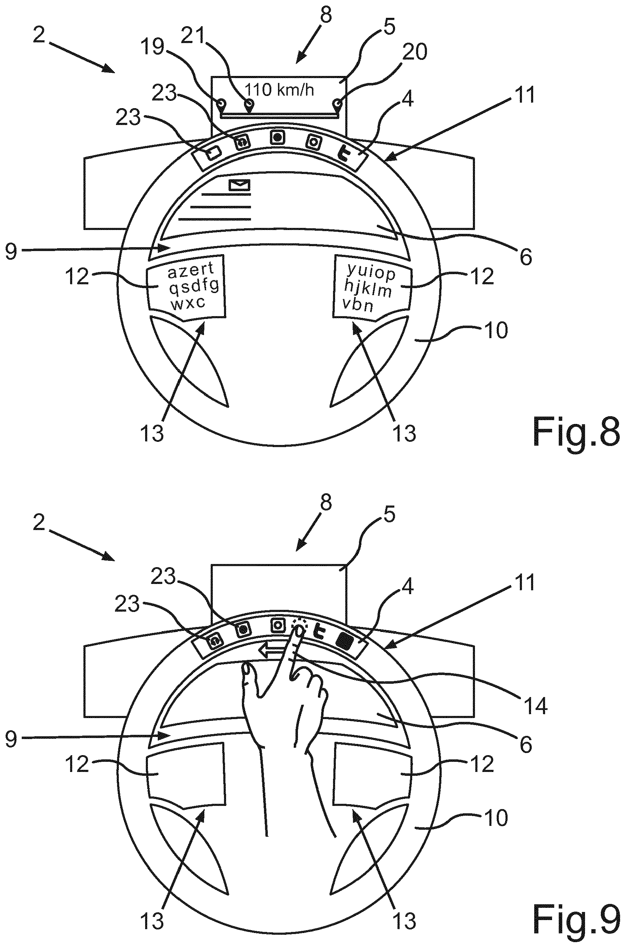

Fig. 8 shows a further operating mode of the operating assembly 2. This operating mode is in particular suitable during an autonomous drive of the motor vehicle 1. Here, the information with respect to the starting position 19, the destination position 20 and the current position 21 are presented to the driver on the first display device 5. On the first operating device 4, different operating elements 23 are presented to the driver. The operating elements 23 are associated with corresponding functional devices or functions of the motor vehicle 1. For example, the operating elements 23 can be associated with an email program, an Internet browser or the like. These operating elements 23 can be correspondingly selected and be presented on one of the display devices 5, 6. Presently, the email program is presented on the second display device 6. By means of the second operating device 12, presently, a keyboard, in particular a typewriter keyboard, is provided. Thus, it is allowed to the driver to conveniently write emails during the autonomous drive mode.

Fig. 9 illustrates how the operating elements 23 can be displaced by means of a wiping gesture performed with a finger 14. By the wiping movement carried out with the finger, it can be determined, which operating elements 23 are to be presented on the first display device 4. Thus, different operating elements 23 can be presented on the first display device 4.

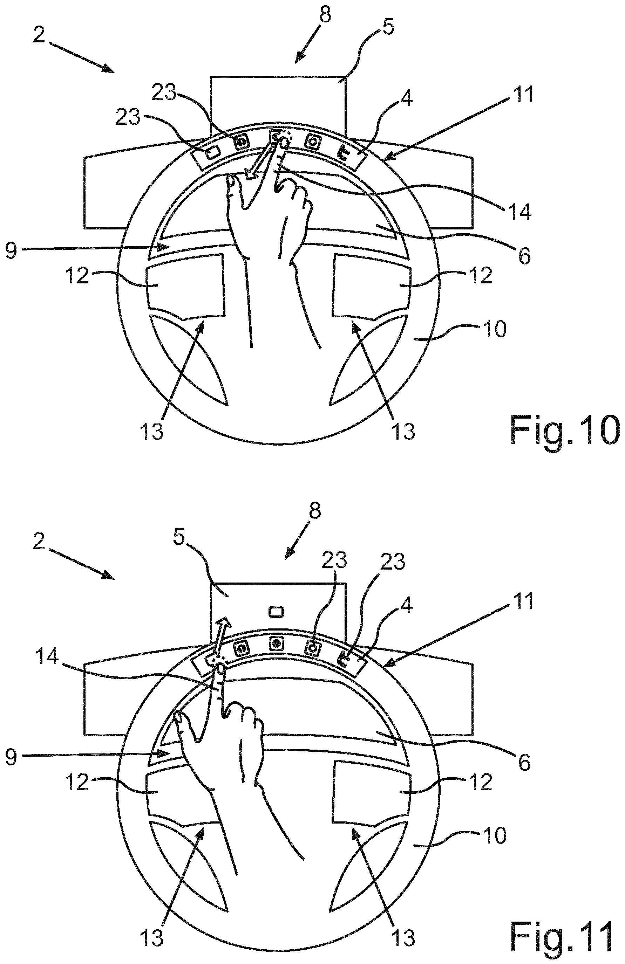

Fig. 10 and 11 illustrate how functions or applications associated with the respective operating elements 23 can be presented on the respective display devices 5 and 6. If for example a wiping gesture towards the second display device 6 or the instrument cluster 9 is performed with the finger 14, the function or application associated with this operating element 23 is presented on the second display device 6. If the wiping movement is performed towards the first display device 5 or the head-up display 8, a display of the function or the application associated with the respective operating element 23 is effected on the first display device 5. In this manner, the operating assembly 2 can be simply and reliably operated.

## Claims

1. Operating assembly (2) for a motor vehicle (1) including at least one first operating device (4) disposed on and/or in a steering wheel (10) of the motor vehicle (1) and adapted to acquire an operating input of an occupant of the motor vehicle (1), and including a control device (3) adapted to control a functional device of the motor vehicle (1) depending on the operating input acquired by the at least one first operating device (4), wherein the at least one first operating device (4) is disposed in and/or on a steering wheel rim (11) of the steering wheel (10) and is adapted to acquire a wiping movement, which the occupant performs with at least one finger (14), as the operating input
**characterized in that**
the at least one first operating device (4) has a touch-sensitive screen and is adapted to provide a display for the occupant.

2. Operating assembly (2) according to claim 1,
**characterized in that**
the control device (3) is adapted to start a drive engine of the motor vehicle (1) as the functional device depending on the operating input.

3. Operating assembly (2) according to claim 1 or 2,
**characterized in that**
the control device (3) is adapted to control a driver assistance system of the motor vehicle (1) as the functional device depending on the operating input.

4. Operating assembly (2) according to claim 3, **characterized in that**
the display describes a starting point (19) and/or a destination point (20) of a route and/or a current position (21) of the motor vehicle (1).

5. Operating assembly (2) according to claim 3 or 4, **characterized in that**
the display includes information to an autonomous and/or a manual drive state of the motor vehicle (1).

6. Operating assembly (2) according to any one of claims 3 to 5, **characterized in that**
the display includes a plurality of operating elements (23) and the control device (3) is adapted to alter a presentation and/or an arrangement of the operating elements (23) depending on the operating input.

7. Operating assembly (2) according to claim 6, **characterized in that**
the operating assembly (2) has at least one display device (5, 6) and the control device (3) is adapted to display an application associated with the operating element (23) on the at least one display device (5, 6).

8. Operating assembly (2) according to claim 7, **characterized in that**
the control device (3) is adapted to display the application on the at least one display device (5, 6) if the wiping movement is acquired starting from the operating element (23) towards the at least one display device (5, 6).

9. Operating assembly (2) according to any one of the preceding claims, **characterized in that**
the operating assembly (2) has a first display device (5), which is associated with a head-up display (8), and a second display device (6), which is associated with an instrument cluster (9).

10. Operating assembly (2) according to any one of the preceding claims,
**characterized in that**
the operating assembly (2) has at least one second operating device (12), which is disposed on and/or in a spoke (13) of the steering wheel (10).

11. Operating assembly (2) according to claim 10, **characterized in that**
a keyboard can be provided by means of the at least one second operating device (12).

12. Motor vehicle (1) with an operating assembly (2) according to any one of the preceding claims.

13. Method for operating an operating assembly (2) for a motor vehicle (1), in which by means of at least one first operating device (4), which is disposed on and/or in a steering wheel (10) of the motor vehicle, an operating input of an occupant of the motor vehicle (1) is acquired, and by means of a control device (3), a functional device of the motor vehicle (1) is controlled depending on the operating input acquired by the at least one first operating device (4), wherein the at least one first operating device (4) is disposed in and/or on a steering wheel rim (11) of the steering wheel (10), and by the at least one first operating device (4), a wiping movement, which the occupant performs with at least one finger (14), is acquired as the operating input
**characterized in that**
the at least one first operating device (4) has a touch-sensitive screen and is adapted to provide a display for the occupant.

## Patentansprüche

1. Bedienanordnung (2) für ein Kraftfahrzeug (1) mit mindestens einer ersten Bedienvorrichtung (4), die an und/oder in einem Lenkrad (10) des Kraftfahrzeugs (1) angeordnet ist und dazu angepasst ist, eine Bedieneingabe eines Insassen des Kraftfahrzeugs (1) zu erfassen, und mit einer Steuervorrichtung (3), die dazu angepasst ist, eine Funktionsvorrichtung des Kraftfahrzeugs (1) abhängig von der durch die mindestens eine erste Bedienvorrichtung (4) erfassten Bedieneingabe zu steuern, wobei die mindestens eine erste Bedienvorrichtung (4) in und/oder an einem Lenkradkranz (11) des Lenkrades (10) angeordnet ist und dazu angepasst ist, eine Wischbewegung, die der Insasse mit mindestens einem Finger (14) ausführt, als Bedieneingabe zu erfassen,
**dadurch gekennzeichnet, dass**
die mindestens eine erste Bedienvorrichtung (4) einen berührungsempfindlichen Bildschirm aufweist und dazu angepasst ist, eine Anzeige für den Insassen bereitzustellen.

2. Bedienanordnung (2) nach Anspruch 1,
**dadurch gekennzeichnet, dass**
die Steuervorrichtung (3) dazu angepasst ist, einen Antriebsmotor des Kraftfahrzeugs (1) als Funktionsvorrichtung abhängig von der Bedieneingabe zu starten.

3. Bedienanordnung (2) nach Anspruch 1 oder 2,
**dadurch gekennzeichnet, dass**
die Steuervorrichtung (3) dazu angepasst ist, ein Fahrerassistenzsystem des Kraftfahrzeugs (1) als Funktionsvorrichtung abhängig von der Bedieneingabe zu steuern.

4. Bedienanordnung (2) nach Anspruch 3,
**dadurch gekennzeichnet, dass**
die Anzeige einen Startpunkt (19) und/oder einen Zielpunkt (20) einer Fahrstrecke und/oder eine aktuelle Position (21) des Kraftfahrzeugs (1) beschreibt.

5. Bedienanordnung (2) nach Anspruch 3 oder 4,
**dadurch gekennzeichnet, dass**
die Anzeige Informationen zu einem autonomen und/oder einem manuellen Fahrzustand des Kraftfahrzeugs (1) aufweist.

6. Bedienanordnung (2) nach einem der Ansprüche 3 bis 5,
**dadurch gekennzeichnet, dass**
die Anzeige eine Vielzahl von Bedienelementen (23) aufweist und die Steuervorrichtung (3) dazu angepasst ist, eine Darstellung und/oder eine Anordnung der Bedienelemente (23) abhängig von der Bedieneingabe zu ändern.

7. Bedienanordnung (2) nach Anspruch 6,
**dadurch gekennzeichnet, dass**
die Bedienanordnung (2) mindestens eine Anzeigevorrichtung (5, 6) aufweist und die Steuervorrichtung (3) dazu angepasst ist, eine dem Bedienelement (23) zugeordnete Anwendung auf der mindestens einen Anzeigevorrichtung (5, 6) anzuzeigen.

8. Bedienanordnung (2) nach Anspruch 7,
**dadurch gekennzeichnet, dass**
die Steuervorrichtung (3) dazu angepasst ist, die Anwendung auf der mindestens einen Anzeigevorrichtung (5, 6) anzuzeigen, wenn die Wischbewegung ausgehend vom Bedienelement (23) in Richtung der mindestens einen Anzeigevorrichtung (5, 6) erfasst wird.

9. Bedienanordnung (2) nach einem der vorhergehenden Ansprüche,
**dadurch gekennzeichnet, dass**
die Bedienanordnung (2) eine erste Anzeigevorrichtung (5), die mit einem Head-up-Display (8) verknüpft ist, und eine zweite Anzeigevorrichtung (6), die mit einem Kombiinstrument (9) verknüpft ist, aufweist.

10. Bedienanordnung (2) nach einem der vorhergehenden Ansprüche,
**dadurch gekennzeichnet, dass**
die Bedienanordnung (2) mindestens eine zweite Bedienvorrichtung (12) aufweist, die an und/oder in einer Speiche (13) des Lenkrads (10) angeordnet ist.

11. Bedienanordnung (2) nach Anspruch 10,
**dadurch gekennzeichnet, dass**
eine Tastatur mittels der mindestens einen zweiten Bedienvorrichtung (12) bereitgestellt werden kann.

12. Kraftfahrzeug (1) mit Bedienanordnung (2) nach einem der vorhergehenden Ansprüche.

13. Verfahren zum Bedienen einer Bedienanordnung (2) für ein Kraftfahrzeug (1), bei der mittels mindestens einer ersten Bedienvorrichtung (4), die an und/oder in einem Lenkrad (10) des Kraftfahrzeugs angeordnet ist, eine Bedieneingabe eines Insassen des Kraftfahrzeugs (1) erfasst wird, und mittels einer Steuervorrichtung (3) eine Funktionsvorrichtung des Kraftfahrzeugs (1) abhängig von der durch die mindestens eine erste Bedienvorrichtung (4) erfassten Bedieneingabe gesteuert wird, wobei die mindestens eine erste Bedienvorrichtung (4) in und/oder an einem Lenkradkranz (11) des Lenkrads (10) angeordnet ist und durch die mindestens eine erste Bedienvorrichtung (4) eine Wischbewegung, die der Insasse mit mindestens einem Finger (14) ausführt, als Bedieneingabe erfasst wird
**dadurch gekennzeichnet, dass**
die mindestens eine erste Bedienvorrichtung (4) einen berührungsempfindlichen Bildschirm aufweist und dazu angepasst ist, eine Anzeige für den Insassen bereitzustellen.

## Revendications

1. Ensemble de commande (2) pour un véhicule automobile (1) comprenant au moins un premier dispositif de commande (4) disposé sur et/ou dans une roue motrice (10) du véhicule automobile (1) et conçu pour acquérir une entrée de commande d'un occupant du véhicule automobile (1) et comprenant un dispositif de pilotage (3) conçu pour piloter un dispositif fonctionnel du véhicule automobile (1) en fonction de l'entrée de commande acquise par l'au moins un premier dispositif de commande (4), dans lequel l'au moins un premier dispositif de commande (4) est disposé dans et/ou sur une jante de roue motrice (11) de la roue motrice (10) et est conçu pour acquérir un mouvement d'essuyage effectué par l'occupant avec au moins un doigt (14) comme entrée de commande ;
**caractérisé en ce que** :
l'au moins un premier dispositif de commande (4) a un écran tactile et est conçu pour fournir un affichage à l'occupant.

2. Ensemble de commande (2) selon la revendication 1,
**caractérisé en ce que** le dispositif de pilotage (3) est conçu pour démarrer un moteur d'entraînement du véhicule automobile (1) comme dispositif fonctionnel en fonction de l'entrée de commande.

3. Ensemble de commande (2) selon la revendication 1 ou 2, **caractérisé en ce que** le dispositif de pilotage (3) est conçu pour piloter un système d'assistance du conducteur du véhicule automobile (1) comme dispositif fonctionnel en fonction de l'entrée de commande.

4. Ensemble de commande (2) selon la revendication 3,
**caractérisé en ce que** l'écran décrit un point de départ (19) et/ou un point de destination (20) d'une trajectoire et/ou une position actuelle (21) du véhicule automobile (1).

5. Ensemble de commande (2) selon la revendication 3 ou 4, **caractérisé en ce que** l'écran comprend des informations sur un état de conduite autonome et/ou manuelle du véhicule automobile (1).

6. Ensemble de commande (2) selon l'une quelconque des revendications 3 à 5, **caractérisé en ce que** l'écran comprend une pluralité d'éléments de commande (23) et que le dispositif de pilotage (3) est conçu pour modifier une présentation et/ou un agencement des éléments de commande (23) en fonction de l'entrée de commande.

7. Ensemble de commande (2) selon la revendication 6,
**caractérisé en ce que** l'ensemble de commande (2) a au moins un dispositif d'affichage (5, 6) et que le dispositif de pilotage (3) est conçu pour afficher une application associée à l'élément de commande (23) sur l'au moins un dispositif d'affichage (5, 6).

8. Ensemble de commande (2) selon la revendication 7,
**caractérisé en ce que** le dispositif de pilotage (3) est conçu pour afficher l'application sur l'au moins un dispositif d'affichage (5, 6) si le mouvement d'essuyage est acquis depuis l'élément de commande (23) en direction de l'au moins un dispositif d'affichage (5, 6) .

9. Ensemble de commande (2) selon l'une quelconque des revendications précédentes, **caractérisé en ce que** l'ensemble de commande (2) a un premier dispositif d'affichage (5) qui est associé à un affichage tête haute (8) et un second dispositif d'affichage (6) qui est associé à un tableau de bord (9).

10. Ensemble de commande (2) selon l'une quelconque des revendications précédentes, **caractérisé en ce que** l'ensemble de commande (2) a au moins un second dispositif de commande (12), qui est disposé sur et/ou dans un rayon (13) de la roue motrice (10).

11. Ensemble de commande (2) selon la revendication 10,
**caractérisé en ce qu'**un clavier peut être fourni par l'au moins un second dispositif de commande (12).

12. Véhicule automobile (1) avec un ensemble de commande (2) selon l'une quelconque des revendications précédentes.

13. Procédé pour commander un ensemble de commande (2) pour un véhicule automobile (1), dans lequel une entrée de commande d'un occupant du véhicule automobile (1) est acquise par au moins un premier dispositif de commande (4) qui est disposé sur et/ou dans une roue motrice (10) du véhicule automobile et dans lequel un dispositif fonctionnel du véhicule automobile (1) est piloté au moyen d'un dispositif de pilotage (3) en fonction de l'entrée de commande acquise par l'au moins un premier dispositif de commande (4), dans lequel l'au moins un premier dispositif de commande (4) est disposé dans et/ou sur une jante de roue motrice (11) de la roue motrice (10), et par l'au moins un premier dispositif de commande (4), un mouvement d'essuyage réalisé par l'occupant avec au moins un doigt (14) servant d'entrée de commande ;
**caractérisé en ce que** :
l'au moins un premier dispositif de commande (4) a un écran tactile et est conçu pour fournir un affichage pour l'occupant.
